# EUROPÄISCHE PATENTSCHRIFT

(11) **EP 2 395 282 B1**
(45) Veröffentlichungstag und Bekanntmachung des Hinweises auf die Patenterteilung: **27.11.2013**
(21) Anmeldenummer: 11167501.3
(22) Anmeldetag: 25.05.2011
(51) Int. Cl.: F21S 8/10, F21V 31/03, F21W 101/00, F21Y 101/02

(54) **Kraftfahrzeugleuchte**
Motor vehicle light
Lampe de véhicule automobile

(30) Priorität: 10.06.2010 DE 202010007805 U
(43) Veröffentlichungstag der Anmeldung: 14.12.2011
(73) Patentinhaber: Odelo GmbH, 71409 Schwaikheim (DE)
(72) Erfinder: Ricking, Thorsten, 71364 Winnenden (DE); Kutterer, Achim, 70197 Stuttgart (DE)
(74) Vertreter: Benninger, Johannes

(56) Entgegenhaltungen:
- WO-A1-97/27042
- US-A1- 2006 035 557

## Beschreibung

Die Erfindung betrifft eine Kraftfahrzeugleuchte gemäß dem Oberbegriff des Anspruchs 1.

Eine Kraftfahrzeugleuchte erfüllt je nach Ausgestaltung eine oder mehrere Aufgaben bzw. Funktionen, wie beispielsweise bei einer Ausgestaltung als Scheinwerfer eine die Fahrbahn ausleuchtende Funktion, oder bei einer Ausgestaltung als Signalleuchte eine Signalfunktion, wie beispielsweise zur Fahrtrichtungsanzeige oder Anzeige einer Bremstätigkeit, oder einer Sicherstellung einer Sichtbarkeit des Kraftfahrzeugs bei Tag und/oder Nacht, wie etwa bei einer Ausgestaltung als Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine Kraftfahrzeugleuchte besteht im Wesentlichen aus einem Gehäuse, einem darin angeordneten Leuchtmittel, gegebenenfalls einem typischerweise hinter dem Leuchtmittel in dem Gehäuse angeordneten Reflektor und/oder einem vor dem Leuchtmittel angeordnete Optikelement, wie etwa einer Linse, einem Rinnenkonzentrator, z.B. einer Parabolrinne (CPC; Compound Parabolic Concentrator) oder dergleichen zur Ausformung einer definierten Abstrahlcharakteristik, sowie einer das Leuchtmittel und gegebenenfalls den Reflektor bzw. das Optikelement gegen Witterungseinflüsse schützenden, kurz auch als Lichtscheibe bezeichneten transparenten Abdeckung. Die Lichtscheibe umschließt gemeinsam mit dem Gehäuse einen das Leuchtmittel und gegebenenfalls den Reflektor aufnehmenden Leuchteninnenraum. In dem Leuchteninnenraum kann zwischen Leuchtmittel und Lichtscheibe eine Optikscheibe angeordnet sein, welche beispielsweise eine bestimmte Struktur und/oder Maskierung aufweisen kann, beispielsweise um bei einer klaren, für einen Betrachter eine Tiefenwirkung bewirkenden Lichtscheibe das Leuchtmittel zu kaschieren. Das Gehäuse bzw. der Leuchteninnenraum kann dabei in mehrere Kammern mit jeweils eigenen Leuchtmitteln, eventuell Reflektoren und/oder Optikscheiben, sowie gegebenenfalls Lichtscheiben unterteilt sein, von denen mehrere Kammern gleiche oder jede Kammer eine andere der oben beschriebenen Funktionen erfüllen kann.

Der Leuchteninnenraum kann gegenüber der Umgebung komplett abgeschlossen sein. Ebenso kann der Raum über eine oder mehrere Belüftungsöffnung oder über eine wasserundurchlässige Membran mit der Umgebung kommunizieren. Eine solche Kraftfahrzeugleuchte wird auch als geschlossene Leuchte bezeichnet. In einer anderen Ausführung kann die Kraftfahrzeugleuchte auch zum Fahrzeuginnenraum mehr oder weniger großflächig geöffnet sein. Eine solche Kraftfahrzeugleuchte wird auch als offene Leuchte bezeichnet.

Als Leuchtmittel kommen beispielsweise Glühlampen, Gasentladungslampen und vermehrt auch einzeln oder gruppenweise angeordnete Leuchtdioden zum Einsatz. Letztere bestehen aus einem Lichtemittierende-Diode-Halbleiter-Chip, kurz LED-Chip, sowie einer beispielsweise durch Spritzgießen angeformten, den LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es wird explizit etwas anderes erwähnt. Herausragende Eigenschaften von LEDs im Vergleich zu anderen, konventionellen Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Leuchtmittel besonders kompakte Kraftfahrzeugleuchten verwirklicht werden, die an fast jede nur erdenkliche Einbausituation angepasst sein können.

Insbesondere bei geschlossenen Kraftfahrzeugleuchten kommt es häufig zu Betauungserscheinungen der Lichtscheibe bei bestimmten Witterungsverhältnissen. Dadurch erscheint die Kraftfahrzeugleuchte als undicht. Die Betauung der Lichtscheibe entsteht, wenn die Lichtscheibe abkühlt und der in der noch wärmeren Luft im Leuchteninnenraum enthaltene Wasserdampf an der Grenzschicht aufgrund der Dampfdrucksättigung ausfällt.

Der Effekt der Betauung tritt besonders bei Kraftfahrzeugleuchten mit LEDs als Leuchtmittel auf, da diese aufgrund ihrer höheren Lichtausbeute im Vergleich zu einem konventionellen Leuchtmittel gleicher Leistungsaufnahme eine geringere Wärmeentwicklung im Leuchteninnenraum begünstigen. Dadurch kann es zumindest bei ungünstigen Witterungsbedingungen selbst in Betrieb einer Kraftfahrzeugleuchte zu einer Betauung der Lichtscheibe kommen. Weiterhin tritt bei Leuchtdioden im Vergleich zu herkömmlichen Lichtquellen keine oder so gut wie keine Wärmestrahlung auf, welche die Lichtscheibe erwärmen und der Betauung so bereits funktionsbedingt entgegenwirken könnte.

Durch JP 2009-54348 A ist eine Kraftfahrzeugleuchte mit einer an der Innenseite der Lichtscheibe aufgetragenen, als antifogging coating bezeichneten beschlaghemmenden Beschichtung bekannt.

Durch DE 103 597 48 A1 ist bekannt, ein feuchtigkeitsabsorbierendes Material im Leuchteninnenraum einer Kraftfahrzeugleuchte anzuordnen.

Durch DE 36 267 27 A1 und durch DE 36 267 26 A1 ist bekannt, den Leuchteninnenraum einer Kraftfahrzeugleuchte über einen mit reversiblem hygroskopischen Trocknungsmitteln gefüllten Kanal mit der Umgebung zu verbinden.

Durch US 5,406,467 ist bekannt, in einem den Leuchteninnenraum einer Kraftfahrzeugleuchte verbindenden Gummischlauch einen Filter anzuordnen.

Durch DE 35 42 457 A1 ist eine Kraftfahrzeugleuchte mit einem von einem durch eine Lichtscheibe geschlossenen Leuchtengehäuse umgebenen Leuchteninnenraum bekannt. Die Kraftfahrzeugleuchte hat ein Einlassventil, durch welches bei einem Unterdruck in der Leuchte gegenüber der Umgebung Luft in den Leuchteninnenraum gelangt. Darüber hinaus hat die Kraftfahrzeugleuchte ein Auslassventil, mittels dem bei einem Überdruck in der Leuchte gegenüber der Umgebung Luft aus dem Leuchteninnenraum entweichen kann. Dem Einlassventil ist ein Trocknungsmittel zugeordnet, welches Feuchtigkeit aus der in den Innenraum strömenden Luft adsorbiert. Das Trocknungsmittel kann einen Teil der Feuchtigkeit an die aus dem Innenraum durch das Auslassventil entweichende Luft abgeben. Der Leuchteninnenraum ist demnach über das Ein- und Auslassventil mit der Umgebung verbunden. Durch eine Folie getrennt ist im Ventil das Feuchtigkeit absorbierende Trocknungsmittel angeordnet, welches eintretende Feuchtigkeit aufnehmen und an wieder ausströmende Luft abgeben soll.

Nachteilig hieran sind die aufgrund des zugrunde liegenden Prinzips der Adsorption nur geringe Aufnahmefähigkeit von Feuchtigkeit des Trocknungsmittels sowie der hohe konstruktive Aufwand mit Einlassventil und Auslassventil. Bei der Adsorption findet eine Anreicherung von Stoffen aus Gasen oder Flüssigkeiten an der Oberfläche eines Festkörpers, allgemeiner an der Grenzfläche zwischen zwei Phasen statt, wohingegen bei der Absorption die Stoffe in das Innere eines Festkörpers oder einer Flüssigkeit eindringen.

Durch FR 2701756 ist zur Verhinderung eines Beschlagens der Lichtscheibe die Verwendung absorbierender Materialien im Leuchteninnenraum bekannt, die allerdings schnell gesättigt sind, eine kurze Lebensdauer aufweisen und regelmäßig ausgetauscht werden müssen. Um diesen Nachteil zu beheben ist bei einer Kraftfahrzeugleuchte anstelle der Verwendung absorbierender Materialien im Leuchteninnenraum eine Luftzirkulation von einer Einlassöffnung zu einer Auslassöffnung durch den Leuchteninnenraum hindurch vorgesehen.

Durch WO 97/27042 A1 ist ein Trocknungsmittel bestehend aus einer Mischung eines porösen Polymers mit einem trocknenden Mittel bekannt. Das so hergestellte Trocknungsmittel kann nahe einer Wärmequelle oder wechselwarmen Vorrichtung, wie etwa einer Kraftfahrzeugleuchte verwendet werden. Die von der Wärmequelle erzeugte Wärme regeneriert das unter das poröse Polymer gemischte trocknende Mittel.

Durch DE 20 2004 015 615 U1 ist eine Kraftfahrzeugleuchte mit einem gegenüber der Umgebung abgeschlossenen Leuchteninnenraum bekannt. Der Leuchteninnenraum steht unter Unterdruck gegenüber der Umgebung und ist mit vorgetrockneter Luft befüllt. In dem Leuchteninnenraum befindet sich ein Trocknungsmittel, welches Feuchtigkeit bis zu dessen Sättigung aufnimmt und dann ausgetauscht werden muss.

Durch DE 10 2005 019 651 A1 ist eine Kraftfahrzeugleuchte bekannt, bei der eine Wärmequelle sowie ein Trocknungsmittel mit einer Porenstruktur und hohem Adsorptionsvermögen im Leuchteninnenraum angeordnet ist, sowie eine Fördervorrichtung, welche Luft von der Wärmequelle an der Lichtscheibe entlang zum Trocknungsmittel fördert.

Ungeachtet des zum Teil hohen technischen Aufwands beispielsweise zur Umwälzung von Luft und/oder zum regelmäßigen Austausch eines Trocknungsmittels bleibt das Problem ungelöst, eine Betauung der Lichtscheibe auch ohne Hilfsmittel wie Heizung und Fördervorrichtung dauerhaft zu verhindern.

Der Erfindung liegt die Aufgabe zugrunde, eine Kraftfahrzeugleuchte zu entwickeln, bei der eine Betauung der Lichtscheibe wirkungsvoll verhindert wird.

Die Aufgabe wird gelöst durch eine Kraftfahrzeugleuchte mit den Merkmalen des Anspruchs 1.

Demnach ist eine Kraftfahrzeugleuchte mit einem durch ein Leuchtengehäuse und eine dieses abschließende Lichtscheibe umschlossenen Leuchteninnenraum vorgesehen, welche ein Feuchtigkeit aufnehmendes und regenerativ wieder abgebendes superabsorbierendes Polymer beherbergt. Das superabsorbierende Polymer hält die relative Luftfeuchtigkeit im Leuchteninnenraum auf einem durch die Struktur des Polymers vorgegebenen konstanten Wert.

Das von der Kraftfahrzeugleuchte beherbergte superabsorbierende Polymer ist bevorzugt im Leuchteninnenraum angeordnet.

Beispielsweise kann das superabsorbierende Polymer an einer den Leuchteninnenraum begrenzenden Wandung, wie etwa an der Innenseite des Leuchtengehäuses und/oder der Innenseite der Lichtscheibe angeordnet sein. Das superabsorbierende Polymer kann dabei wenigstens einen Teil der entsprechenden Innenseite einnehmen.

bei der in dem Leuchteninnenraum ein Feuchtigkeit aufnehmendes und regenerativ wieder abgebendes superabsorbierendes Polymer angeordnet ist, welches

Es ist ersichtlich dass die Erfindung in jedem Fall durch eine Verwendung von superabsorbierenden Materialien zur Aufnahme der in den Leuchteninnenraum eintretenden Luftfeuchtigkeit verwirklicht ist. Diese Materialien sind in der Lage die aufgenommene Luftfeuchtigkeit, ohne die Notwendigkeit von Zusatzeinrichtungen wieder abzugeben. Damit lässt sich eine kontrollierte Luftfeuchtigkeit innerhalb der Leuchte einstellen. Durch die reversible Feuchtigkeitsaufnahme ist gewährleistet, dass es zu keinem Sättigungseffekt und somit zu keinem Verbrauch des Feuchtigkeit regulierenden Materials kommt. Ebenso sind zur Erzeugung des reversiblen Effektes keine Zusatzeinrichtungen, wie beispielsweise eine Heizung oder dergleichen erforderlich.

Sich hierdurch ergebende Vorteile gegenüber dem Stand der Technik sind unter anderem, dass die Erfindung das der Fachwelt seit langem bekannte Problem einer Betauung der Lichtscheibe von Kraftfahrzeugleuchten bei bestimmten Witterungsbedingungen löst. Das superabsorbierende Polymer ist eine vergleichsweise preiswerte Lösung, insbesondere gegenüber den aus dem Stand der Technik bekannten Vorschlägen einer Verwendung einer Fördervorrichtung, um Luft im Leuchteninnenraum zur Verhinderung einer Betauung umzuwälzen. Aufgrund der enormen Aufnahmefähigkeit von Feuchtigkeit durch das superabsorbierende Polymer und durch dessen reversible Eigenschaft, Feuchtigkeit ohne spezielle Maßnahmen, wie z.B. Auskochen, Erhitzen oder dergleichen, wieder abgeben zu können, ist ein nur geringer Bauraum erforderlich.

Das superabsorbierende Polymer ist bevorzugt aus Polyacrylsäure hergestellt, welche teilneutralisiert ist. Das superabsorbierende Polymer zeichnet sich dadurch aus, dass es ein Vielfaches seines Eigengewichts an Flüssigkeit bzw. Feuchtigkeit aufnehmen und speichern kann, wobei der Vorgang reversibel ist.

Das superabsorbierende Polymer umfasst bevorzugt vernetzte Polymerpartikel, in denen Natriumionen gebunden sind. Hierdurch baut sich beim Kontakt mit Wasser ein osmotischer Druck auf, der das Wasser in das Polymer hineinsaugt. Das Wasser wird so lange aufgenommen, bis die elastischen Rückstellkräfte des Polymernetzwerks die osmotischen Kräfte kompensieren.

Das superabsorbierende Polymer kann in Form eines Vlieses in den Leuchteninnenraum eingebracht sein. Dabei kann das superabsorbierende Polymer das Vliesmaterial bilden, dieses umfassen oder von diesem umfasst werden. Das Vliesmaterial kann sehr flexibel auch in kleinen verbleibenden Bauräumen im Leuchteninnenraum eingesetzt werden.

Die Kraftfahrzeugleuchte kann beispielsweise als Kraftfahrzeugheckleuchte oder als Tagfahrleuchte ausgebildet sein.

Die Kraftfahrzeugleuchte kann wahlweise oder in Kombination eine oder mehrere LED als Leuchtmittel umfassen und/oder eine Kondensatabführung aufweisen, welche den von der Lichtscheibe und dem Leuchtengehäuse umschlossenen Leuchteninnenraum der Kraftfahrzeugleuchte mit der Umgebung verbindet. Alternativ oder zusätzlich ist denkbar, dass die Kraftfahrzeugleuchte eine oder mehrere Glühlampen und/oder Gasentladungslampen als Leuchtmittel aufweist.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente.

Es zeigen:
- Fig. 1: eine schematische Darstellung einer Kraftfahrzeugleuchte mit einer Heizeinrichtung gemäß eines ersten Ausführungsbeispiels in teilweise geschnittener, perspektivischer Ansicht.
- Fig. 2: eine schematische Darstellung einer Kraftfahrzeugleuchte mit einer Heizeinrichtung gemäß eines zweiten Ausführungsbeispiels in teilweise geschnittener, perspektivischer Ansicht.

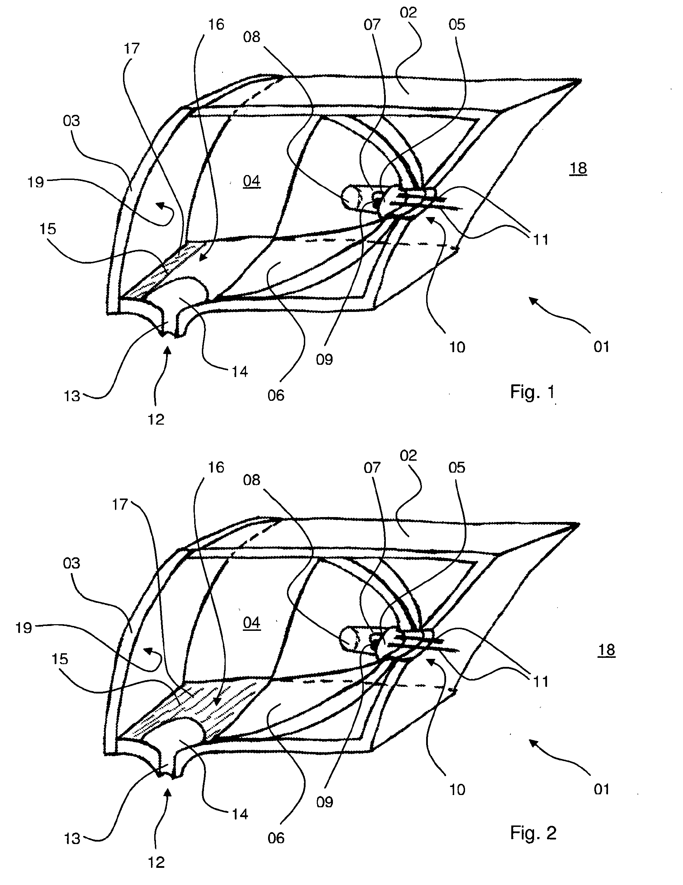

Eine in den Fig. 1 und 2 dargestellte Kraftfahrzeugleuchte 01 besteht im Wesentlichen aus einem von einem Leuchtengehäuse 02 und einer das Leuchtengehäuse 02 abschließenden Lichtscheibe 03 umschlossenen Leuchteninnenraum 04, in dem ein Leuchtmittel 05 und ein Reflektor 06 angeordnet sind. Der kann Reflektor 06 mehrere, für jeweils ein Leuchtmittel 05 vorgesehene Reflektorkammern aufweisen. Mehrere einzeln oder gruppenweise angeordnete Leuchtmittel 05 können auf einem nicht dargestellten Leuchtmittel-Träger angeordnet sein, welcher Leuchtmittel-Träger zudem den Reflektor 06 umfassen kann bzw. in welchen der Reflektor integriert sein kann. Auch kann der Leuchtmittel-Träger in den Reflektor 06 integriert sein.

Der Reflektor 06 kann als ein Kunststoffspritzgussteil hergestellt sein, welches bevorzugt zumindest an seinen dem Leuchtmittel 05 zugewandten Flächen mit einer reflektierenden Beschichtung versehen ist.

Als Leuchtmittel 05 kommen beispielsweise Glühlampen, Gasentladungslampen und auch einzeln oder gruppenweise angeordnete Leuchtdioden 07 in Frage. Letztere bestehen aus einem Lichtemittierende-Diode-Halbleiter-Chip 09, kurz LED-Chip 09, sowie einer beispielsweise durch Spritzgießen angeformten, den LED-Chip 09 ganz oder teilweise umhüllenden Primäroptik 08. Auch können ein oder mehrere reine LED-Chips 09 ohne angeformte Primäroptiken 08 als Leuchtmittel 05 zum Einsatz kommen. Auch können mehrere LED-Chips 09 von einer gemeinsamen Primäroptik 08 ganz oder teilweise umhüllt sein, wobei die Primäroptik 08 auch als Lichtleiter ausgebildet sein kann.

Öffnungen 10 im rückseitigen Bereich von Reflektor 06 und Leuchtengehäuse 02 können zur elektrischen Kontaktierung der elektrischen Anschlüsse 11 des Leuchtmittels 05 vorgesehen sein. Die Öffnungen 10 können nachträglich abgedichtet sein, beispielsweise durch eine oder mehrere Gummitüllen oder Dichtungen.

Bei den in den Fig. 1 und 2 dargestellten Kraftfahrzeugleuchten 01 ist im Leuchteninnenraum 04 ein Feuchtigkeit aufnehmendes und regenerativ wieder abgebendes superabsorbierendes Polymer 15 angeordnet. Das superabsorbierende Polymer 15 ist beispielsweise im unteren Teil des Leuchteninnenraums 04 in einem Bereich nahe der Lichtscheibe 03 angeordnet.

Das superabsorbierende Polymer 15 kann wie in den Fig. 1 und 2 dargestellt zumindest in einer an den unteren Rand der Lichtscheibe 03 anschließenden Partie 16 des Leuchtengehäuses 02 derart angeordnet sein, dass das superabsorbierende Polymer 15 zumindest am an das Leuchtengehäuse 02 anschließenden unteren Rand der Lichtscheibe 03 angeordnet ist. Grundsätzlich kann zwischen Lichtscheibe 03 und dem in der an den unteren Rand der Lichtscheibe 03 anschließende Partie 16 des Leuchtengehäuses 02 angeordneten superabsorbierenden Polymer 15 ein Abstand vorgesehen sein, welcher beispielsweise eine Beschädigung des superabsorbierenden Polymern 15 bei der Herstellung einer stoffschlüssigen Verbindung von Leuchtengehäuse 02 und Lichtscheibe 03 während eines Montagevorgangs der Kraftfahrzeugleuchte 01 verhindert. Auch ist denkbar, das superabsorbierende Polymer 15 nach der Herstellung einer solchen Verbindung an geeigneter Stelle in den Leuchteninnenraum 04 einzubringen.

Wichtig ist hervorzuheben, dass das superabsorbierende Polymer 15 beispielsweise in Form eines Vlieses 17 grundsätzlich an jeder beliebigen geeigneten Stelle im Leuchteninnenraum 04 angeordnet werden kann. Darüber hinaus kann superabsorbierendes Polymer 15 an mehreren beliebigen geeigneten Stellen gleichzeitig im Leuchteninnenraum 04 angeordnet sein. Eine geeignete Stelle kennzeichnet sich dabei beispielsweise dadurch aus, dass das dort angeordnete superabsorbierende Polymer 15 den Lichtweg vom Leuchtmittel 05 gegebenenfalls über einen Reflektor durch die Lichtscheibe 03 hindurch aus der Kraftfahrzeugleuchte 01 hinaus bevorzugt nicht beeinträchtigt.

Das Leuchtengehäuse 02 kann mit einer Kondensatabführung 12 ausgestattet sein, welche den Leuchteninnenraum 04 mit der Umgebung 18 verbindet. Die Kondensatabführung 12 ist beispielsweise als eine im unteren Teil des Leuchtengehäuses 02 angeordneten Öffnung 13 ausgeführt. Die Kondensatabführung 12 kann am tiefsten Punkt einer im unteren Bereich des Leuchtengehäuses 02 ausgebildeten Senke 14 vorgesehen sein. Dadurch kann sich in beliebigen Teilen der Kraftfahrzeugleuchte 01 beispielsweise in ausgeschaltetem Zustand der Kraftfahrzeugleuchte 01 gegebenenfalls von dem superabsorbierenden Polymer 15 nicht erfasstes niederschlagendes Kondensat am durch die Senke 14 gebildeten tiefsten Punkt des Leuchtengehäuses 02 sammeln und durch die Öffnung 13 der Kondensatabführung 12 abfließen.

Die Kraftfahrzeugleuchte 01 kann beispielsweise als eine Tagfahrleuchte oder als eine Kraftfahrzeugheckleuchte ausgebildet sein.

Insbesondere bei beispielsweise geschlossenen Kraftfahrzeugleuchten 01 kommt es häufig zu einer so genannten Betauung an der Innenseite 19 der Lichtscheibe 03 bei bestimmten Witterungsverhältnissen. Dadurch erscheint die Kraftfahrzeugleuchte 01 als undicht.

Diese Betauung nach Regenfahrten oder nach kalten Nächten ist ein normaler physikalischer Vorgang. Beispielsweise durch eine Belüftungsöffnung wird die sich ausdehnende erwärmte Luft aus der eingeschalteten Kraftfahrzeugleuchte 01 verdrängt. Nach dem Ausschalten kühlt das Leuchtengehäuse 02 und die im Leuchteninnenraum 04 enthaltene Luft langsam ab. Feuchte Luft von außen dringt über die Belüftungsöffnung ein und schlägt sich ggf. unter geeigneten thermodynamischen Bedingungen als Kondensat an der Lichtscheibe 03 nieder. Die Betauung der Lichtscheibe 03 entsteht, wenn für die an die Lichtscheibe 03 angrenzende Luft durch eine Absenkung bzw. Erniedrigung der Lufttemperatur der Taupunkt erreicht wird.

Insbesondere bei Kraftfahrzeugleuchten 01 mit Glühlampen als Leuchtmittel 05 wird durch die Abwärme des Leuchtmittels 05 soviel Wärme erzeugt, dass der Effekt nur in einem erträglichen Maß auftritt. Bei Kraftfahrzeugleuchten 01 mit einer oder mehreren Leuchtdioden 07 aus jeweils einem ganz oder teilweise von einer Primäroptik 08 umhüllten LED-Chip 09 und/oder einem oder mehreren reinen LED-Chips 09 ohne angeformte Primäroptiken 08 als Leuchtmittel 05 entfällt dieser Erwärmungsvorgang. Bei solchen Kraftfahrzeugen 01 wird nach dem Stand der Technik zum Einen mehr oder weniger erfolgreich versucht, mit aufwändigen Belüftungssystemen, die dafür sorgen dass eine ausreichende Luftzirkulation im Leuchteninnenraum 04 stattfindet, ein Beschlagen der Lichtscheibe 03 zu verhindern. Zum Anderen ist bekannt, die Innenseite 19 der Lichtscheibe 03 mit einer Antifogschicht zu behandeln. Dabei wir durch eine geeignete hydrophile Beschichtung der sichtbare Tröpfchenbeschlag in einen unsichtbaren Wasserfilm umgewandelt. Darüber hinaus ist die Verwendung absorbierender Materialien, wie etwa Silicagel im Leuchteninnenraum 04 bekannt. Die nach dem Stand der Technik bislang verwendeten absorbierenden Materialien haben jedoch den Nachteil, dass sie schnell gesättigt sind, somit eine kurze Lebensdauer aufweisen und regelmäßig ausgetauscht werden müssen bzw. über eine zusätzliche Heizung aufgeheizt werden müssen, um die absorbierte Feuchtigkeit wieder abzugeben.

Das erfindungsgemäß beispielsweise in einer an den unteren Rand der Lichtscheibe 03 anschließenden Partie 16 des Leuchtengehäuses 02 im unteren Teil des Leuchteninnenraums 04 in einem Bereich nahe der Lichtscheibe 03 angeordnete superabsorbierende Polymer 15 kann Feuchtigkeit aufnehmen und regenerativ wieder abgeben und die relative Luftfeuchtigkeit im Leuchteninnenraum auf einem durch die Struktur des Polymers vorgegebenen konstanten Wert halten. Dadurch kann einerseits eine Betauung verhindert und andererseits eine bereits bestehende, beispielsweise im Stillstand eines Kraftfahrzeugs entstandene Betauung abgebaut werden.

Superabsorbierende Polymere 15 können beispielsweise aus Polyacrylsäure hergestellt werden, die teilneutralisiert wird. Sie zeichnen sich dadurch aus, dass sie ein Vielfaches ihres Eigengewichtes an Flüssigkeit aufnehmen und speichern können. Hinter einem superabsorbierenden Polymer 15 steckt beispielsweise ein vernetztes Polymerpartikel, in dem Natriumionen gebunden sind. Hierdurch baut sich ein osmotischer Druck auf, der umgebendes Wasser bzw. Feuchtigkeit in das Polymer hineinsaugt. Wasser wird solange aufgenommen, bis die elastischen Rückstellkräfte des Polymernetzwerkes die osmotischen Kräfte kompensieren. Der Vorgang ist reversibel.

Dank der speziellen Eigenschaften kann ein superabsorbierendes Polymer 15 beliebig oft Feuchtigkeit aufnehmen und wieder abgeben.

Das superabsorbierende Polymer 15 kann beispielsweise in Verbindung mit einem Polyestervlies 17 zur Feuchtigkeitsregulierung im Leuchteninnenraum 04 der Kraftfahrzeugleuchte 01 verwendet werden. Ebenso ist denkbar, dass das superabsorbierende Polymer 15 selbst in Form eines Vlieses 17 in den Leuchteninnenraum 04 eingebracht ist. In beiden Fällen kann das superabsorbierende Polymer 15 das Vliesmaterial 17 bilden, dieses umfassen oder von diesem umfasst werden. Das Vliesmaterial 17 kann sehr flexibel auch in kleinen verbleibenden Bauräumen im Leuchteninnenraum eingesetzt werden.

Wichtig ist hervorzuheben, dass die Kraftfahrzeugleuchte 01 nicht zwingend mit einem oder mehreren Reflektoren 06, beispielsweise einem Reflektor mit mehreren für jeweils ein Leuchtmittel 05 vorgesehenen Reflektorkammern, ausgestattet sein muss. Alternativ ist beispielsweise denkbar, dass das Leuchtengehäuse 02 auf einer oder mehreren seiner dem Leuchteninnenraum 04 zugewandten Innenflächen wenigstens zum Teil mit einer reflektierenden Beschichtung versehen sein. Die mit einer reflektierenden Beschichtung versehenen Innenflächen des Leuchtengehäuses 02 bilden Reflexionsflächen, welche vollständig oder zum Teil einen Reflektor 06 ersetzen können. Es können außerdem Optiken verwendet werden, die vor die Leuchtdioden 07 geschaltet sind, so dass kein Reflektor oder eine andere beschichtete Fläche notwendig sind.

Die Erfindung ist insbesondere im Bereich der Herstellung von Kraftfahrzeugleuchten gewerblich anwendbar.

### Bezugszeichenliste

- 1: Kraftfahrzeugleuchte
- 2: Leuchtengehäuse
- 3: Lichtscheibe
- 4: Leuchteninnenraum
- 5: Leuchtmittel
- 6: Reflektor
- 7: Leuchtdiode
- 8: Umhüllung
- 9: LED-Chip
- 10: Öffnungen
- 11: elektrische Anschlüsse
- 12: Kondensatabführung
- 13: Öffnung
- 14: Senke
- 15: superabsorbierendes Polymer
- 16: Partie
- 17: Vlies
- 18: Umgebung
- 19: Innenseite

## Patentansprüche

1. Kraftfahrzeugleuchte (01) mit einem durch ein Leuchtengehäuse (02) und eine dieses abschließende Lichtscheibe (03) umschlossenen Leuchteninnenraum (04), **dadurch gekennzeichnet,**
**dass** die Kraftfahrzeugleuchte (01) ein Feuchtigkeit aufnehmendes und regenerativ wieder abgebendes superabsorbierendes Polymer (15) beherbergt, welches die relative Luftfeuchtigkeit im Leuchteninnenraum (04) auf einem durch die Struktur des Polymers (15) vorgegebenen konstanten Wert hält.

2. Kraftfahrzeugleuchte nach Anspruch 1,
**dadurch gekennzeichnet,**
**dass** das superabsorbierende Polymer (15) aus teilneutralisierter Polyacrylsäure hergestellt ist.

3. Kraftfahrzeugleuchte nach Anspruch 1 oder 2,
**dadurch gekennzeichnet,**
**dass** das superabsorbierende Polymer (15) vernetzte Polymerpartikel umfasst, in denen Natriumionen gebunden sind.

4. Kraftfahrzeugleuchte nach Anspruch 1, 2 oder 3
**dadurch gekennzeichnet,**
**dass** das superabsorbierende Polymer (15) in Form eines Vlieses (17) in den Leuchteninnenraum eingebracht ist.

5. Kraftfahrzeugleuchte nach Anspruch 4,
**dadurch gekennzeichnet,**
**dass** das superabsorbierende Polymer (15) das Vliesmaterial (17) bildet oder dieses umfasst oder von diesem umfasst wird.

6. Kraftfahrzeugleuchte nach einem der vorhergehenden Ansprüche,
**dadurch gekennzeichnet,**
**dass** das superabsorbierende Polymer (15) zumindest in einer an den unteren Rand der Lichtscheibe (03) anschließenden Partie (16) des Leuchtengehäuses (02) angeordnet ist.

7. Kraftfahrzeugleuchte nach einem der vorhergehenden Ansprüche,
**dadurch gekennzeichnet,**
**dass** das superabsorbierende Polymer (15) zumindest am an das Leuchtengehäuse (02) anschließenden unteren Rand der Lichtscheibe (03) angeordnet ist.

8. Kraftfahrzeugleuchte nach einem der vorhergehenden Ansprüche,
**gekennzeichnet durch**,
eine Kondensatabführung (12), welche den Leuchteninnenraum (04) mit der Umgebung (18) verbindet.

9. Kraftfahrzeugleuchte nach einem der vorhergehenden Ansprüche,
**gekennzeichnet durch**
zumindest ein wenigstens einen LED-Chip (09) umfassendes, in dem Leuchteninnenraum (04) angeordnetes Leuchtmittel (05).

10. Kraftfahrzeugleuchte nach einem der vorhergehenden Ansprüche,
**dadurch gekennzeichnet,**
**dass** die Kraftfahrzeugleuchte (01) als eine Kraftfahrzeugheckleuchte oder als eine Tagfahrleuchte ausgebildet ist.

11. Kraftfahrzeugleuchte nach einem der vorhergehenden Ansprüche,
**dadurch gekennzeichnet,**
**dass** das von der Kraftfahrzeugleuchte (01) beherbergte superabsorbierende Polymer in dem Leuchteninnenraum (04) angeordnet ist.

## Claims

1. Motor vehicle lamp (01) having a lamp interior (04) that is enclosed by a lamp housing (02) shut off by a lens (03), **characterised in that** the motor vehicle lamp (01) accommodates a superabsorbent polymer (15) that absorbs and dissipates regenerated moisture and that maintains the relative humidity in the lamp interior (04) at a constant level, which is defined by and results from the structure of the polymer (15).

2. Motor vehicle lamp according to claim 1, **characterised in that** the superabsorbent polymer (15) is made of a partially neutralised polyacrylic acid.

3. Motor vehicle lamp according to claim 1 or 2, **characterised in that** the superabsorbent polymer (15) comprises sodium ions bound in cross-linked polymer particles.

4. Motor vehicle lamp according to claim 1, 2 or 3, **characterised in that** the superabsorbent polymer (15) is inserted into the lamp interior in the form of a fleece (17).

5. Motor vehicle lamp according to claim 4, **characterised in that** the superabsorbent polymer (15) either forms the fleece material (17) or enfolds it or is enfolded by the material.

6. Motor vehicle lamp according to one of the previous claims, **characterised in that** the superabsorbent polymer (15) is arranged in at least a section (16) of the lamp housing (02) that is adjacent to the bottom edge of the lens (03).

7. Motor vehicle lamp according to one of the previous claims, **characterised in that** the superabsorbent polymer (15) is arranged at least at the bottom edge of the lens (03) that is adjacent to the lamp housing (02).

8. Motor vehicle lamp according to one of the previous claims, **characterised by** a means for condensate discharge (12), which connects the lamp interior (04) with the surrounding area (18).

9. Motor vehicle lamp according to one of the previous claims, **characterised by** a lighting means (05) being disposed in the lamp interior (04) and comprising at least one LED chip (09).

10. Motor vehicle lamp according to one of the previous claims, **characterised in that** the motor vehicle lamp (01) is formed to serve as a tail light or as a daytime running light.

11. Motor vehicle lamp according to one of the previous claims, **characterised in that** the superabsorbent polymer accommodated by the motor vehicle lamp (01) is disposed within the lamp interior (04).

## Revendications

1. Lampe de véhicule automobile (01) comprenant un volume intérieur de lampe (04) qui est entouré par un boîtier de lampe (02) et par une glace (03) fermant ce dernier, **caractérisée par le fait que** ladite lampe de véhicule automobile (01) loge un polymère superabsorbant (15) qui absorbe de l'humidité et cède celle-ci à nouveau de façon régénérative et qui maintient l'humidité relative de l'air, à l'intérieur dudit volume intérieur de lampe (04), à une valeur constante donnée par la structure du polymère (15).

2. Lampe de véhicule automobile selon la revendication 1, **caractérisée par le fait que** ledit polymère superabsorbant (15) est produit à partir d'acide polyacrylique partiellement neutralisé.

3. Lampe de véhicule automobile selon la revendication 1 ou 2, **caractérisée par le fait que** ledit polymère superabsorbant (15) comprend des particules polymériques réticulées dans lesquelles sont liés des ions de sodium.

4. Lampe de véhicule automobile selon la revendication 1, 2 ou 3, **caractérisée par le fait que** ledit polymère superabsorbant (15) est introduit sous forme d'un non-tissé (17) dans ledit volume intérieur de lampe.

5. Lampe de véhicule automobile selon la revendication 4, **caractérisée par le fait que** ledit polymère superabsorbant (15) forme ladite matière non-tissé (17) ou comprend celle-ci ou est compris par celle-ci.

6. Lampe de véhicule automobile selon l'une quelconque des revendications précédentes, **caractérisée par le fait que** ledit polymère superabsorbant (15) est disposé au moins dans une partie (16) du boîtier de lampe (02) qui est contiguë au bord inférieur de ladite glace (03).

7. Lampe de véhicule automobile selon l'une quelconque des revendications précédentes, **caractérisée par le fait que** ledit polymère superabsorbant (15) est disposé au moins sur le bord inférieur de ladite glace (03) qui est contigu au boîtier de lampe (02).

8. Lampe de véhicule automobile selon l'une quelconque des revendications précédentes, **caractérisée par** une évacuation de condensat (12) qui fait communiquer le volume intérieur de lampe (04) avec l'environnement (18).

9. Lampe de véhicule automobile selon l'une quelconque des revendications précédentes, **caractérisée par** au moins un moyen lumineux (05) comprenant au moins une puce LED (09) et disposé dans le volume intérieur de lampe (04).

10. Lampe de véhicule automobile selon l'une quelconque des revendications précédentes, **caractérisée par le fait que** ladite lampe de véhicule automobile (01) est réalisée comme un feu arrière de véhicule automobile ou comme un feu de roulage de jour.

11. Lampe de véhicule automobile selon l'une quelconque des revendications précédentes, **caractérisée par le fait que** ledit polymère superabsorbant logé par la lampe de véhicule automobile (01) est disposé dans ledit volume intérieur de lampe (04).
